(19) Europäisches Patentamt
European Patent Office
Office européen des brevets

(11) **EP 4 718 514 A1**

(12) **EUROPEAN PATENT APPLICATION**

(43) Date of publication:
**01.04.2026 Bulletin 2026/14**

(21) Application number: **25200176.3**

(22) Date of filing: **04.09.2025**

(51) International Patent Classification (IPC):
*H01M 4/133* (2010.01)    *H01M 4/134* (2010.01)
*H01M 4/36* (2006.01)    *H01M 4/38* (2006.01)
*H01M 4/587* (2010.01)    *H01M 10/0525* (2010.01)

(52) Cooperative Patent Classification (CPC):
**H01M 4/133; H01M 4/134; H01M 4/364;
H01M 4/386; H01M 4/587; H01M 10/0525;**
H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.09.2024 JP 2024169491**

(71) Applicant: **Prime Planet Energy & Solutions, Inc.
Chuo-ku, Tokyo 103-0022 (JP)**

(72) Inventor: **KANG, Surim
Tokyo, 103-0022 (JP)**

(74) Representative: **Kuhnen & Wacker
Patent- und Rechtsanwaltsbüro PartG mbB
Prinz-Ludwig-Straße 40A
85354 Freising (DE)**

(54) **NEGATIVE ELECTRODE OF SECONDARY BATTERY AND SECONDARY BATTERY USING SAID NEGATIVE ELECTRODE**

(57)    Provided is a technique to suppress a capacity maintenance rate reduction. A negative electrode disclosed herein includes a negative electrode active material layer including a first Si-containing particle and a second Si-containing particle. When an expansion rate S2 of the second Si-containing particle after an electrical charge A with respect to one before the electrical charge A is treated as 1, an expansion rate S1 of the first Si-containing particle after the electrical charge A with respect to one before the electrical charge A is more than 0.3 and not more than 0.9. When the mean particle diameter (D50) of the first Si-containing particle is treated as 1, the mean particle diameter (D50) of the second Si-containing particle is more than 0.1 and not more than 1.

FIG.2

**Description**

BACKGROUND OF THE DISCLOSURE

1. Technical Field

A present disclosure relates to a negative electrode of a secondary battery, and a secondary battery using this negative electrode.

2. Background

Recently, a secondary battery is suitably used for a portable power supply, such as personal computer and portable terminal, a power supply for driving automobiles, such as battery electric vehicle (BEV), hybrid electric vehicle (HEV), and plug-in hybrid electric vehicle (PHEV), or the like.

Regarding a purpose for the power supply for driving automobiles, especially regarding a purpose for the power supply for driving the BEV, from a perspective of extending a driving distance of the vehicle, it is desired to make the secondary battery have a higher capacity. As a negative electrode active material whose capacity is high, a Si-containing particle is known, and it is known, with the Si-containing particle, to be able to make the secondary battery have the higher capacity.

Japanese Patent Application Publication No. 2009-9727 discloses a negative electrode that is used for a nonaqueous electrolyte secondary battery consisting of a negative electrode, a positive electrode, and a nonaqueous electrolyte having a lithium ion electrically conductive property. This negative electrode includes a negative electrode active material that consists of composite particles containing at least 2 kinds, a silicon alone and a silicon chemical compound, whose particle size distributions are different from each other. This patent document describes that, by a configuration described above, it is possible in a nonaqueous electrolytic solution secondary battery to enhance a current collector property, additionally to enhance an electrical charge and discharge efficiency at a first electrical charge and discharge, and further to implement a good cycle characteristic in which an energy density is high.

SUMMARY

However, Si-containing particles have a property that an expansion and contraction at the electrical charge and discharge time is large. The secondary battery in which the Si-containing particles are used has a problem that, when the electrical charge and discharge is repeated, the negative electrode is repeatedly expanded and contracted and then a cycle performance is reduced. Thus, it is desired to develop the negative electrode in which a reduction of the capacity maintenance rate is suppressed when the electrical charge and discharge is repeated.

In view of the above described issue, the present disclosure has an object to provide the negative electrode which contains the Si-containing particles, and in which the reduction of the capacity maintenance rate is suppressed when the electrical charge and discharge is repeated.

A negative electrode of a secondary battery of the present disclosure includes a negative electrode current collector, and a negative electrode active material layer. The negative electrode active material layer is supported by the negative electrode current collector. The negative electrode active material layer includes first Si-containing particles and second Si-containing particles. When an expansion rate S2 of the second Si-containing particles after an electrical charge A with respect to one before the electrical charge A is treated as 1, an expansion rate S1 of the first Si-containing particles after the electrical charge A with respect to one before the electrical charge A is more than 0.3 and not more than 0.9. The electrical charge A is an electrical charge in which, after a constant current electrical charge is performed under 25°C environment by a current value being 0.01 C till 4.2 V is performed, a constant voltage electrical charge is performed till the current value reaches 0.005 C. When a mean particle diameter (D50) of the first Si-containing particles is treated as 1, a mean particle diameter (D50) of the second Si-containing particles is more than 0.1 and not more than 1. According to the configuration described above, it is possible to suppress a reduction in a capacity maintenance rate when the electric charge and the electric discharge are repeated.

From another aspect, the secondary battery of the present disclosure includes a positive electrode, a negative electrode, and an electrolyte. The negative electrode is the above described negative electrode. According to the configuration described above, it is possible to suppress the reduction on the capacity maintenance rate when the electric charge and the electric discharge are repeated.

BRIEF DESCRIPTION OF THE DRAWINGS

FIG. 1 is a cross section view that schematically shows a configuration of a negative electrode of a secondary battery in accordance with one embodiment of the present disclosure.

FIG. 2 is a cross section view that schematically shows a configuration of particles contained in a negative electrode active material layer of the negative electrode shown by FIG. 1.

FIG. 3 is a cross section view that schematically shows a configuration of a lithium ion secondary battery constructed with the negative electrode of the secondary battery in accordance with one embodiment of the present disclosure.

FIG. 4 is a schematic exploded view that shows a configuration of a wound electrode assembly of the lithium ion secondary battery shown by FIG. 3.

DESCRIPTION OF THE EMBODIMENTS

Below, while referring to drawings, an embodiment in accordance with the present disclosure would be explained. Incidentally, a matter not described in the present description but required for performing the present disclosure can be grasped as design matters of those skilled in the art based on the related art in the present field. The present disclosure can be executed based on the contents disclosed in the present description, and the technical common sense in the present field. In the following drawings, the same numerals and signs are given to the members/parts providing the same effect. In each drawing, the dimensional relation (a length, a width, a thickness, or the like) does not reflect the actual dimensional relation. Incidentally, a numerical value range represented as "A to B" in the present description can contain A and B.

Incidentally, the term "secondary battery" in the present description represents an electricity storage device being capable of repeatedly charging and discharging. The term "lithium ion secondary battery" in the present description represents a secondary battery that uses a lithium ion as a charge carrier and implements an electrical charge and discharge by movement of the lithium ion between a positive electrode and the negative electrode.

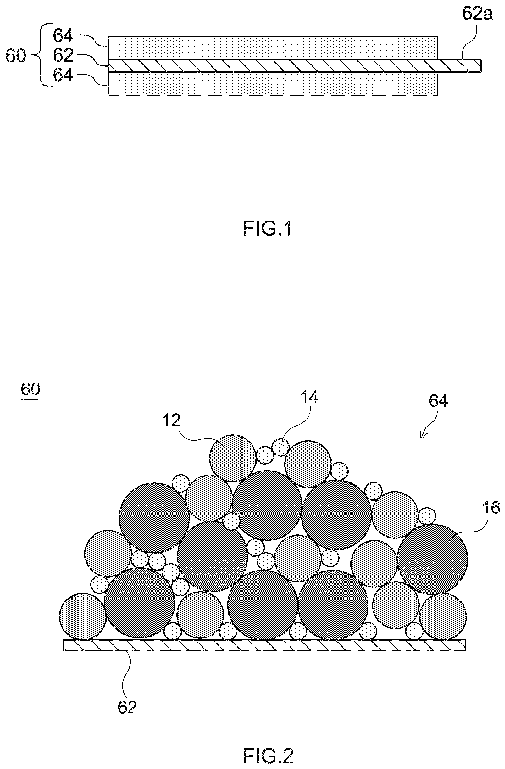

The herein disclosed negative electrode is used for a secondary battery, or suitably used for a lithium ion secondary battery. One embodiment of the herein disclosed negative electrode would be particularly explained, while referring to FIG. 1. FIG. 1 is a cross section view that schematically shows an example of a negative electrode 60 in accordance with the present embodiment, and is a cross section view that is shown along a thickness direction and a width direction. The negative electrode 60 in accordance with the present embodiment shown by FIG. 1 is the negative electrode of the lithium ion secondary battery.

As shown in the drawing, the negative electrode 60 includes a negative electrode current collector 62 and a negative electrode active material layer 64 that is supported by the negative electrode current collector 62. In other words, the negative electrode 60 includes the negative electrode current collector 62 and the negative electrode active material layer 64 that is provided on the negative electrode current collector 62. The negative electrode active material layer 64 might be provided on one surface of the negative electrode current collector 62 or might be provided on both surfaces of the negative electrode current collector 62 as shown by the illustrated example. It is preferable that the negative electrode active material layer 64 is provided on both surfaces of the negative electrode current collector 62.

As shown in the illustrated example, a negative electrode active material layer non-formation part 62a in which the negative electrode active material layer 64 is not provided might be provided at one of end parts in the width direction of the negative electrode 60. On the negative electrode active material layer non-formation part 62a, the negative electrode current collector 62 is exposed and thus the negative electrode active material layer non-formation part 62a can function as an electrical collector part. However, a configuration for electrically collecting from the negative electrode 60 is not restricted by this.

A shape of the negative electrode current collector 62 is a foil shape (or a sheet shape) in the illustrated example, but it is not restricted by this. The negative electrode current collector 62 might be formed in a rod shape, a plate shape, a mesh shape, or the like. As a material of the negative electrode current collector 62, similarly to a conventional lithium ion secondary battery, it is possible to use a metal having a good electrically conductive property (for example, copper, nickel, titanium, stainless steel, or the like), and the copper is preferable among them. As the negative electrode current collector 62, it is especially preferable to use a copper foil.

A size of the negative electrode current collector 62 is not particularly restricted, and it is good to be suitably decided in accordance with a battery design. In a situation where the copper foil is used as the negative electrode current collector 62, a thickness of it is not particularly restricted, but it might be, for example, equal to or more than 5 $\mu$m and not more than 35 $\mu$m, or preferably equal to or more than 6 $\mu$m and not more than 20 $\mu$m.

The negative electrode active material layer 64 contains a negative electrode active material. As the negative electrode active material, for example, first Si-containing particles and second Si-containing particles are used. About this, it is explained with FIG. 2. FIG. 2 is a schematic cross section view that shows particles contained in the negative electrode active material layer 64 shown by FIG. 1. As shown in FIG. 2, the negative electrode active material layer 64 contains the first Si-containing particles 12 and the second Si-containing particles 14. Incidentally, FIG. 2 is a schematic view, and thus a number of the particles, a distribution of the particles, or the like, are not restricted to one shown by FIG. 2.

It is good that the first Si-containing particles 12 and the second Si-containing particles 14 are, for example, particles of Si-C composite materials. The Si-C composite material includes, for example, a carbon domain and a Si-containing domain. Incidentally, it is enough for the first Si-containing particles 12 and the second Si-containing particles 14 to contain the Si, and they might not be the Si-C composite material. The first Si-containing particles 12 and the second Si-containing particles 14 might be, for example, Si particles, Si oxide particles, or the like.

The carbon domain is, for example, a carbon precursor carbonide (for example, a petroleum pitch, a coal pitch, a phenolic resin, or the like); a graphite; or the like. The carbon domain suitably configures a carbon matrix. Thus, the Si-C composite material is suitably a material in which the Si-containing domain is dispersed into the carbon matrix. The Si-C composite material can include, for example, plural Si-containing domains in the carbon matrix. In this case, the carbon matrix can relieve a volume change caused by an expansion and a contraction of the Si-containing domain, and thus it is advantageous.

The Si-containing domain contains the Si, and is configured with, for example, the Si, a Si oxide ($SiO_x$), a Si nitride ($SiN_x$), a Si carbide ($SiC_x$), or the like. The Si-containing domain is configured with preferably at least any of the Si and the Si oxide ($SiO_x$). The Si-containing domain might be nanoparticles. An oxygen content amount of the Si-containing domain is preferably equal to or less than 10 mass%.

A mean particle diameter of the Si-containing domain is, for example, equal to or less than 50 nm, or might be 5 nm to 50 nm. Incidentally, said "mean particle diameter of the Si-containing domain" can be obtained as described below. At first, the negative electrode active material layer 64 is subjected to a FIB (a focused ion beam) processing, so as to manufacture a specimen for a scan transmission electron microscope (STEM) observation. Then, after this specimen is subjected to an element analysis by EDX elemental mapping, a BF image (a bright field image) and a HAADF image (a high angle annular dark field image) are obtained. From a contrast and a shape obtained with the BF image and the HAADF image, it is possible to obtain a diameter of the Si-containing domain. Diameters of arbitrary selected 10 or more Si-containing domains are obtained, and a mean value of them herein is treated as said "mean particle diameter of the Si-containing domain".

The Si-C composite material contains, for example, a carbon base material, or nanoparticles containing the Si dispersed into an inside of this carbon base material (below, it is referred to as "Si-containing nanoparticles", too). From a perspective of suppressing the volume change of the Si, the Si-C composite material suitably contains the carbon base material having voids and contains the Si-containing nanoparticles arranged at an inside of the voids, or further suitably contains a porous carbon base material and contains the Si-containing nanoparticles arranged at the inside of the voids of this porous carbon base material. Alternatively, the Si-C composite material might contain the carbon particles and the Si-containing nanoparticles adhered on a surface of this carbon particles, or might contain particles containing the Si and carbon nanoparticles adhered to a surface of the particles containing Si.

When an expansion rate S2 of second Si-containing particles 14 is treated as 1, an expansion rate S1 of first Si-containing particles 12 is, for example, more than 0.3 and not more than 0.9, and it is, from a perspective of implementing an effect of a herein disclosed technique, preferably 0.4 to 0.8. The expansion rate S1 and the expansion rate S2 herein mean a volume expansion rate for a volume after an electrical charge A with respect to a volume before the electrical charge A. The expansion rate S1 and the expansion rate S2 can be suitably changed, for example, by changing Si content rates of the first Si-containing particles 12 and the second Si-containing particles 14, a void amount of the carbon base material, or the like.

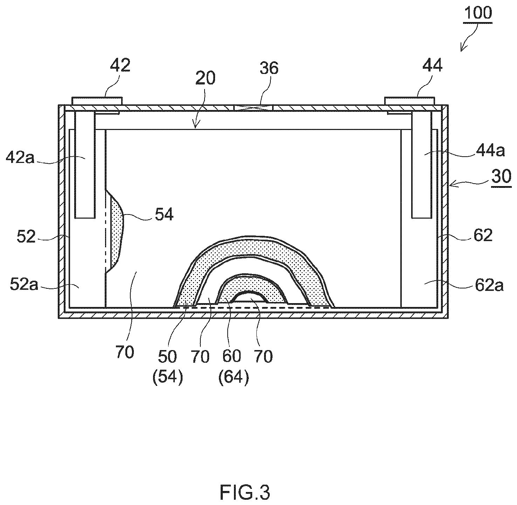

The electrical charge A herein is an electrical charge in which, after a constant current electrical charge is performed under 25°C environment by a current value being 0.01 C till 4.2 V, a constant voltage electrical charge is performed till the current value reaches 0.005 C. The electrical charge A is performed, for example, on a secondary battery for evaluation (for example, the lithium ion secondary battery) that includes the negative electrode containing only the first Si-containing particles or the second Si-containing particles as the negative electrode active material. For the electrical charge A, it is preferable that the secondary battery for evaluation is, for example, in a condition where a SOC (a state of charge) is 0%. Although not particularly restricting, it is preferable that the electrical charge A is performed, for example, before an initial electrical charge of the secondary battery for evaluation is performed. Incidentally, the secondary battery for evaluation described above might include the same configuration as the lithium ion secondary battery 100 (see FIG. 3), other than the configuration in which the negative electrode active material layer contains only the first Si-containing particles or the second Si-containing particles as the negative electrode active material.

The expansion rate S1 can be obtained, for example, as described below. At first, a cross section being along a thickness direction of the negative electrode active material layer containing only the first Si-containing particles as the negative electrode active material is processed for observation with an electron microscope (SEM). The process described above is performed with a cross section polisher under a condition where the voltage is 4 kV to 6 kV and a processing time is 6 hours to 8 hours. The voltage condition and the processing time can be suitably changed in accordance with a thickness of the negative electrode active material layer and a kind of the negative electrode active material. Next, a SEM observation image of a processing surface is obtained. It is good that an observation magnification at that time is set to be, for example, 1000 times to 4000 times. Next, the secondary battery for evaluation including this negative electrode active material layer is constructed, and then the electrical charge A is performed on this. Next, the secondary battery for evaluation is disassembled and then the negative electrode is taken out. Next, a SEM observation on the processing surface, whose SEM observation image was obtained before the electrical charge A, is performed and thus the SEM observation image after the electrical charge A is obtained. Then, while an image analyzing software (for example, "ImageJ") is used, area sizes P1 of 100 first Si-containing particles selected at random from the SEM observation image before the electrical charge A are measured, and additionally area sizes P2 of the same first Si-containing particles selected from the SEM observation image after the electrical charge A are measured. Then, for each of the particles, the expansion rate is calculated with below described Formula (A):

$$\text{Expansion rate (\%)} = [\sqrt{\{(\text{Area size P2})/(\text{Area size P1})\}}]^3 \times 100 \quad (A)$$

An arithmetic average value for the herein obtained expansion rates of 100 particles is calculated, and it is treated as an expansion rate S1 of the first Si-containing particles.

The expansion rate S1 is, for example, smaller than the expansion rate S2. The expansion rate S1 is, for example, equal to or more than 100%, suitably less than 200%, or further suitably less than 230%. Although not particularly restricting, the expansion rate S1 might be equal to or more than 110%, might be equal to or more than 120%, might be alternatively equal to or less than 190%, or might be equal to or less than 180%.

When the expansion rate S2 is obtained, at first, the cross section being along the thickness direction of the negative electrode active material layer containing only the second Si-containing particles as the negative electrode active material is processed for observation with the SEM. Regarding the expansion rate S2, for example, area sizes Q1 of 100 second Si-containing particles selected at random from the SEM observation image before the electrical charge A are measured, and area sizes Q2 of the same second Si-containing particles of the SEM observation image after the electrical charge A are measured. Then, for each of the particles, the expansion rate is calculated with below described Formula (B):

$$\text{Expansion rate (\%)} = [\sqrt{\{(\text{Area size Q2})/(\text{Area size Q1})\}}]^3 \times 100 \quad (B)$$

An arithmetic average value for the herein obtained expansion rates of 100 particles is calculated, and then it is treated as the expansion rate S2 of the second Si-containing particles. Incidentally, here, a procedure for obtaining the expansion rate S2 might be the same as the procedure for obtaining the expansion rate S1. Thus, an explanation about the procedure for obtaining the expansion rate S2 is suitably omitted.

The expansion rate S2 is, for example, larger than the expansion rate S1. The expansion rate S2 is approximately equal to or more than 180%, for example, is equal to or more than 200%, might be equal to or less than 420%, or is suitably equal to or less than 400%. Although not particularly restricting, the expansion rate S2 might be equal to or more than 210%, alternatively might be equal to or less than 380%, might be equal to or less than 360%, or might be equal to or less than 350%.

When a mean particle diameter (D50) of the first Si-containing particles 12 is treated as 1, a mean particle diameter (D50) of the second Si-containing particles 14 is, for example, more than 0.1 and not more than 1, and from a perspective of implementing an effect of the technique disclosed herein, 0.3 to 1 or 0.3 to 0.9 is preferable. In the present description, the term "mean particle diameter (D50)" means a median diameter (D50), and represents a particle diameter corresponding to cumulative frequency 50 volume% from fine particles, whose particle diameter is smaller, with respect to a particle size distribution on a volume basis according to a laser diffraction and scattering method. The mean particle diameter (D50) can be obtained with a commercially available particle size distribution measuring apparatus configured in a laser diffraction and scattering style, or the like.

The mean particle diameter (D50) of the first Si-containing particles 12 is, for example, the same as the mean particle diameter (D50) of the second Si-containing particles 14, or larger than the mean particle diameter (D50) of the second Si-containing particles 14. The mean particle diameter (D50) of the first Si-containing particles 12 is, for example, equal to or more than 1 $\mu$m, or suitably equal to or less than 25 $\mu$m. Although not particularly restricting, the mean particle diameter (D50) of the first Si-containing particles 12 is preferably equal to or more than 3 $\mu$m, further preferably equal to or more than 5 $\mu$m, or furthermore preferably equal to or more than 7 $\mu$m. On the other hand, the mean particle diameter (D50) of the first Si-containing particles 12 is preferably equal to or less than 20 $\mu$m, further preferably equal to or less than 15 $\mu$m, or furthermore preferably equal to or less than 13 $\mu$m.

The mean particle diameter (D50) of the second Si-containing particles 14 is, for example, smaller than the mean particle diameter (D50) of the first Si-containing particles 12. The mean particle diameter (D50) of the second Si-containing particles 14 is, for example, equal to or more than 1 $\mu$m, or suitably equal to or less than 10 $\mu$m. Although not particularly restricting, the mean particle diameter (D50) of the second Si-containing particles 14 is preferably equal to or more than 2 $\mu$m, or further preferably equal to or more than 3 $\mu$m. In contrary, the mean particle diameter (D50) of the second Si-containing particles 14 is preferably equal to or less than 9 $\mu$m, or further preferably equal to or less than 8 $\mu$m.

A content rate of the Si in the first Si-containing particles 12 and a content rate of the Si in the second Si-containing particles 14 might be the same or might be different from each other. Although not particularly restricting, it is good that the content rate of the Si in the first Si-containing particles 12 and the content rate of the Si in the second Si-containing particles 14 are approximately 20 mass% to 80 mass%.

A mass ratio of the first Si-containing particles 12 and the second Si-containing particles 14 in the negative electrode active material layer 64, which is not particularly restricted insofar as the effect of the herein disclosed technique can be obtained, is 5 : 95 to 95 : 5, for example. This mass ratio (the first Si-containing particles 12 : the second Si-containing particles 14) is preferably 10 : 90 to 90 : 10, or further preferably 15 : 85 to 85 : 10.

Incidentally, the first Si-containing particles 12 and the second Si-containing particles 14 can be manufactured by a well known method. Incidentally, various manufacturing methods of the particle of the Si-C composite material are well known (for example, see Japanese Patent Application Publication No. 2015-38862, International Patent Publication 2014/046144, prior art documents recited in these publications, or the like).

As shown in FIG. 3, the negative electrode active material layer 64 might contain graphite particles 16 as the negative electrode active material, from a perspective of enhancing the electrically conductive property of the negative electrode 60. The graphite particles 16 are, for example, configured to substantially not contain the Si. The content rate of the Si contained in the graphite particles 16 is approximately equal to or less than 10 mass%, for example, equal to or less than 7 mass%, preferably equal to or less than 5 mass%, further preferably equal to or less than 3 mass%, furthermore preferably equal to or less than 1 mass%, alternatively equal to or less than 0.5 mass%, and thus it is better as closer to 0 mass%. The Si content rate can be calculated, for example, by a conventionally known method, such as ICP analysis.

The graphite configuring the graphite particles 16 might be a natural graphite or an artificial graphite, or might be an amorphous carbon coated graphite having a form in which the graphite is coated with an amorphous carbon material.

A shape of the graphite particles 16 is not particularly restricted, and might be a scaly shape, a spheroidized shape, or the like. The graphite particles 16 are preferably a spheroidized graphite particle. In a situation where the graphite particles 16 are spheroidized, a circularity of the graphite particles 16 are preferably 0.85 to 1, further preferably 0.88 to 1, or furthermore preferably 0.90 to 1.

Incidentally, the term "circularity" in the present description represents a ratio of a perimeter of a perfect circle whose area size is the same as a projected area size of a particle with respect to a perimeter of a particle projected image (in other words, the circularity = the perimeter of the perfect circle whose area size is the same as the projected area size / the perimeter of the particle projected image). Thus, as the circularity is closer to 1, it means that the particle projected image is closer to the perfect circle and the particle becomes closer to a perfect spherical shape. The circularity can be obtained, for example, by using a commercially available static automatic image analysis apparatus, obtaining the circularities of 100 or more particles, and calculating a mean value for them.

A mean particle diameter (D50) of the graphite particles 16 is not particularly restricted. The mean particle diameter (D50) of the graphite particles 16 is, for example, 1 μm to 30 μm, preferably 5 μm to 25 μm, further preferably 10 μm to 23 μm, or furthermore preferably 12 μm to 20 μm.

A content rate of the graphite particles 16 with respect to a sum of the first Si-containing particles 12, the second Si-containing particles 14, and the graphite particles 16 is preferably 40 mass% to 90 mass%, further preferably 45 mass% to 85 mass, or furthermore preferably 50 mass% to 80 mass%. A rate of a sum of the first Si-containing particles 12 and the second Si-containing particles 14 with respect to the sum of the first Si-containing particles 12, the second Si-containing particles 14, and the graphite particles 16 is preferably 10 mass% to 60 mass%, further preferably 15 mass% to 55 mass%, or furthermore preferably 20 mass% to 50 mass%.

The negative electrode active material layer 64 might contain a component other than the negative electrode active material, and it is possible as an example of it to use a binder, an electrical conducting material, or the like. As the binder, for example, it is possible to use a styrene butadiene rubber (SBR), carboxymethyl cellulose (CMC), polyacrylic acid (PAA), polyvinylidene fluoride (PVDF), or the like. The CMC functions as a thickening agent, too. As an example of the electrical conducting material, it is possible to use a carbon black, such as acetylene black, a carbon fiber, a carbon nanotube (CNT), or the like. Among them, the CNT is preferable. In a situation where the CNT is used as the electrical conducting material, the negative electrode active material layer 64 might contain a dispersing agent for the CNT.

A content amount of the negative electrode active material in the negative electrode active material layer 64 (in other words, with respect to a total mass of the negative electrode active material layer 64) is preferably equal to or more than 90 mass%, or further preferably equal to or more than 95 mass%. A content amount of the binder in the negative electrode active material layer 64 is preferably equal to or more than 0.1 mass% and not more than 8 mass%, or further preferably equal to or more than 0.5 mass% and not more than 5 mass%. A content amount of the electrical conducting material in the negative electrode active material layer 64 is preferably equal to or more than 0.01 mass% and not more than 3 mass%, or further preferably equal to or more than 0.05 mass% and not more than 1 mass%.

A thickness of the negative electrode active material layer 64 is, which is not particularly restricted, for example, equal to or more than 10 μm and not more than 400 μm, or preferably equal to or more than 20 μm and not more than 300 μm.

The negative electrode 60 might include a member other than the negative electrode current collector 62 and the negative electrode active material layer 64. For example, on the negative electrode active material layer non-formation part 62a, an insulation layer (not shown in drawings) might be provided that is positioned adjacent to the negative electrode active material layer 64. This insulation layer includes, for example, an inorganic filler having an insulating property, or the like.

The negative electrode 60 can be suitably manufactured by a manufacturing method that includes a step for preparing a negative electrode mix paste containing the first Si-containing particles 12, the second Si-containing particles 14, the graphite particles 16 as needed, and a dispersion medium (below, which is referred to as "paste preparing step", too); a step for coating the negative electrode current collector 62 with the prepared negative electrode mix paste (below, which is referred to as "coating step", too); a step for drying this coating negative electrode mix paste so as to form the negative electrode active material layer 64 (below, which is referred to as "drying step", too); and a step for pressing this negative electrode active material layer 64 (below, which is referred to as "pressing step", too).

Incidentally, in the present description, the term "paste" represents a mixture in which a part or all of solid contents are dispersed into a dispersion medium, and semantically covers so-called "slurry", "ink", or the like.

The paste preparing step can be performed according to a well known method by using a well known mixing device, stirring device, or the like, and by mixing the first Si-containing particles 12, the second Si-containing particles 14, the graphite particles 16 as needed, and an arbitrary component (for example, the binder, the electrical conducting material, or the like) into the dispersion medium (for example, water).

The coating step can be performed on the basis of a well known method. In particular, for example, the obtained negative electrode mix paste is applied to coat the negative electrode current collector 62 with a coating device, such as gravure coater, comma coater, slit coater, and die coater, and thus the coating step is performed.

The drying step can be performed on the basis of a well known method. For example, by removing the dispersion medium with a drying equipment, such as drying furnace, from the negative electrode current collector 62 coated with the negative electrode mix paste, the negative electrode active material layer 64 can be formed. By this, it is possible to perform the drying step. A drying temperature and a drying time can be suitably decided in accordance with a solid content concentration of the negative electrode paste, and are not particularly restricted. The drying temperature is, for example, equal to or more than 60°C and not more than 200°C, or preferably equal to or more than 70°C and not more than 150°C. The drying time is, for example, equal to or more than 10 seconds and not more than 30 minutes, or preferably equal to or more than 30 seconds and not more than 10 minutes.

The pressing step can be performed on the basis of a well known method. In particular, by applying a pressure with a roller press, or the like, on the above formed negative electrode active material layer 64, it is possible to perform the pressing step. By the pressing step, the negative electrode active material layer 64 is compressed to be at a predetermined density, and by this, the first Si-containing particles 12, the second Si-containing particles 14, and the graphite particles 16 are densely packed. As described above, it is possible to obtain the negative electrode 60.

As described above, the negative electrode 60 for the secondary battery includes the negative electrode current collector 62 and the negative electrode active material layer 64. The negative electrode active material layer 64 is supported by the negative electrode current collector 62. The negative electrode active material layer 64 contains the first Si-containing particles 12 and the second Si-containing particles 14. When an expansion rate S2 of the second Si-containing particles 14 after the electrical charge A with respect to one before the electrical charge A is treated as 1, the expansion rate S1 of the first Si-containing particles 12 after the electrical charge A with respect to one before the electrical charge A is more than 0.3 and not more than 0.9. The electrical charge A is an electrical charge in which, after a constant current electrical charge is performed under 25°C environment by a current value being 0.01 C till 4.2 V, a constant voltage electrical charge is performed till the current value reaches 0.005 C. When the mean particle diameter (D50) of the first Si-containing particles 12 is treated as 1, the mean particle diameter (D50) of the second Si-containing particles 14 is more than 0.1 and not more than 1.

In other words, regarding the negative electrode 60, the negative electrode active material layer 64 contains the first Si-containing particles 12 whose expansion rate is relatively smaller and whose mean particle diameter (D50) is the same or relatively larger, and contains the second Si-containing particles 14 whose expansion rate is relatively larger and whose mean particle diameter (D50) is the same or relatively smaller. Regarding the negative electrode active material layer 64, by containing 2 kinds of Si-containing particles whose mean particle diameters (D50) are the same or are different from each other, a packing ability is enhanced and an electrically conductive path at the electrical charge and discharge time is maintained in a suitable state. Further, in the negative electrode 60, regarding the Si-containing particles contained in the negative electrode active material layer 64, the expansion rate of the first Si-containing particles 12 whose mean particle diameter (D50) is the same or relatively larger is set to be relatively smaller and the expansion rate of the second Si-containing particles 14 whose mean particle diameter (D50) is the same or relatively smaller is set to be relatively larger. By this, a movement of the Si-containing particles at the electrical charge and discharge time is suppressed, thus the electrically conductive path at the electrical charge and discharge time is maintained in the suitable state, and consequently a reduction in the capacity maintenance rate when the electrical charge and the electrical discharge are repeated is suppressed.

The expansion rate S1 of the first Si-containing particles 12 might be equal to or more than 100% and less than 230%. By this, the expansion rate of the second Si-containing particles 14 is set within a preferable range, and thus it is possible to suppress the negative electrode active material layer 64 at the electrical charge and discharge time from being excessively expanded and contracted.

The expansion rate S2 of the second Si-containing particles 14 might be equal to or more than 180% and not more than 420%. By this, the expansion rate of the first Si-containing particles 12 is set within a preferable range. Thus, it is possible to further properly suppress the movement of the negative electrode active material in the negative electrode active material layer 64 at the electrical charge and discharge time.

The mean particle diameter (D50) of the first Si-containing particles 12 might be equal to or more than 1 $\mu$m and not more than 25 $\mu$m. By this, the mean particle diameter (D50) of the second Si-containing particles 14 is set within a preferable range. Thus, it becomes easy to make the second Si-containing particles 14 fill a gap between the particles, and therefore it is possible to further properly maintain the electrically conductive path of the negative electrode active material layer 64 at the electrical charge and discharge time.

The mean particle diameter (D50) of the second Si-containing particles 14 might be equal to or more than 1 $\mu$m and not more than 10 $\mu$m. By this, the mean particle diameter (D50) of the first Si-containing particles 12 is set within the preferable range. Thus, it is possible to make an appropriate gap between the first Si-containing particles 12 and the first Si-containing particles 12, it is possible to properly arrange the second Si-containing particles 14, and it is possible to further properly maintain the electrically conductive path of the negative electrode active material layer 64 at the electrical charge and discharge time.

The first Si-containing particles 12 and the second Si-containing particles 14 might contain a carbon base material having voids, and might contain nanoparticles containing the Si arranged at the inside of the voids. By this, it is possible to make the voids of the carbon base material at the electrically charging time relieve the expansion of the nanoparticles containing the Si. Thus, it is possible to set the expansion rate S1 of the first Si-containing particles 12 and the expansion rate S2 of the second Si-containing particles 14 within the suitable ranges.

The negative electrode active material layer 64 might further contain the graphite particles 16 that substantially does not contain the Si. By this, it is possible to enhance the electrically conductive property of the negative electrode active material layer 64.

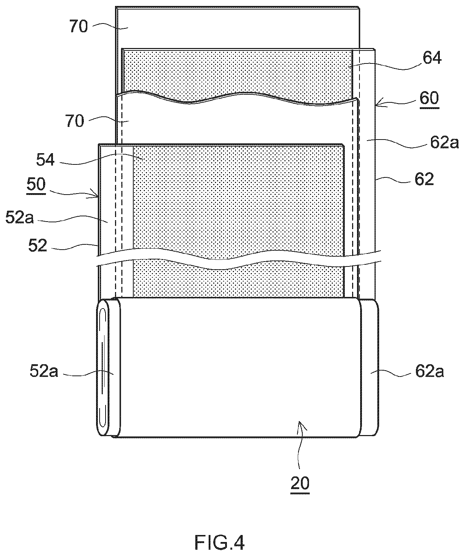

Then, from a different aspect, the herein disclosed secondary battery includes the positive electrode, the negative electrode, and the electrolyte. This negative electrode is the negative electrode 60 in accordance with the above described embodiment. Below, as the lithium ion secondary battery is treated as an example, one embodiment of the herein disclosed secondary battery would be explained while referring to FIG. 3 and FIG. 4. A below described configuration example is a lithium ion secondary battery that is formed in a flat square shape and that includes a wound electrode assembly formed in a flat shape and includes a battery case formed in a flat shape.

The lithium ion secondary battery 100 shown in FIG. 3 is the sealed type lithium ion secondary battery 100 constructed by accommodating the flat-shaped wound electrode assembly 20 and the nonaqueous electrolytic solution (not shown in drawings) in the battery case (in other words, the outer container) 30 formed in a flat square shape. The battery case 30 is provided with a positive electrode terminal 42 and a negative electrode terminal 44 which are for outside connection, and provided with a thin-walled safe valve 36 which is set to release an internal pressure of the battery case 30 when the internal pressure is increased to be equal to or more than a predetermined level. The battery case 30 is provided with an injection port (not shown in drawings) for injecting the nonaqueous electrolytic solution. The positive electrode terminal 42 is electrically connected to a positive electrode current collection plate 42a. The negative electrode terminal 44 is electrically connected to the negative electrode current collection plate 44a. As a material of the battery case 30, for example, it is possible to use a metal material, such as aluminum, being lightweight and having a good thermal conductivity.

The wound electrode assembly 20 has a form, as shown by FIG. 3 and FIG. 4, in which a positive electrode sheet 50 and a negative electrode sheet 60 are stacked one on another via 2 long separator sheets 70 and then wound in a longitudinal direction. The positive electrode sheet 50 has a configuration in which a positive electrode active material layer 54 is formed on one surface or both surfaces (here, both surfaces) of a long positive electrode current collector 52 along the longitudinal direction. The negative electrode sheet 60 has a configuration in which the negative electrode active material layer 64 is formed on one surface or both surfaces (here, both surfaces) of the long negative electrode current collector 62 along the longitudinal direction. A positive electrode active material layer non-formation part 52a (in other words, a portion where the positive electrode active material layer 54 is not formed and the positive electrode current collector 52 is exposed) and the negative electrode active material layer non-formation part 62a (in other words, a portion where the negative electrode active material layer 64 is not formed and the negative electrode current collector 62 is exposed) are formed to protrude outwardly from both ends of the wound electrode assembly 20 in the winding axis direction (in other words, a sheet width direction orthogonal to the longitudinal direction). To the positive electrode active material layer non-formation part 52a and the negative electrode active material layer non-formation part 62a, the positive electrode current collection plate 42a and the negative electrode current collection plate 44a are respectively joined.

As the positive electrode current collector 52 configuring the positive electrode sheet 50, it is possible to use a well known positive electrode current collector that is used for the lithium ion secondary battery, and it is possible as an example of it to use a sheet or a foil which is made from a metal having the good electrically conductive property (for example, aluminum, nickel, titanium, stainless steel, or the like). As the positive electrode current collector 52, it is preferable to use the aluminum foil.

A size of the positive electrode current collector 52 is not particularly restricted, and can be decided suitably according to a battery design. **In** a situation where the aluminum foil is used as the positive electrode current collector 52, a thickness of it is not particularly restricted, but is, for example, equal to or more than 5 $\mu$m and not more than 35 $\mu$m, or preferably equal to or more than 7 $\mu$m and not more than 20 $\mu$m.

The positive electrode active material layer 54 contains a positive electrode active material. As the positive electrode active material, it is possible to use a positive electrode active material which is used for the lithium ion secondary battery and whose composition is well known. In particular, for example, it is possible as the positive electrode active material to use a lithium composite oxide, a lithium transition metal phosphate compound, or the like. The crystal structure of the positive electrode active material is not particularly restricted, but might be a layered structure, a spinel structure, an olivine structure, or the like.

Regarding the lithium composite oxide, it is preferable as a transition metal element to use a lithium transition metal complex oxide containing at least 1 kind among Ni, Co, and Mn, and it is possible as a specific example of it to use a lithium nickel base composite oxide, a lithium cobalt base composite oxide, a lithium manganese base composite oxide, a lithium nickel manganese base composite oxide, a lithium nickel cobalt manganese base composite oxide, a lithium nickel cobalt aluminum base composite oxide, a lithium iron nickel manganese base composite oxide, or the like.

Incidentally, the term "lithium nickel cobalt manganese base composite oxide" in the present description is a term semantically covering not only the oxide whose constituent element is Li, Ni, Co, Mn, or O, but also an oxide containing 1 kind, 2 kinds, or more kinds of additive elements other than them. As an example of the additive element described above, it is possible to use a transition metal element, such as Mg, Ca, Al, Ti, V, Cr, Y, Zr, Nb, Mo, Hf, Ta, W, Na, Fe, Zn, and Sn, a typical metal element, or the like. The additive element might be a semimetal element, such as B, C, Si, and P, or a non-metal element, such as S, F, Cl, Br, and I. This matter is similar even on the above described lithium nickel base composite oxide, lithium cobalt base composite oxide, lithium manganese base composite oxide, lithium nickel manganese base composite oxide, lithium nickel cobalt aluminum base composite oxide, lithium iron nickel manganese base composite oxide, or the like.

As the lithium transition metal phosphate compound, it is possible to use, for example, lithium iron phosphate (LiFePO$_4$), lithium manganese phosphate (LiMnPO$_4$), lithium manganese iron phosphate, or the like.

Regarding these positive electrode active materials, 1 kind might be used alone, or 2 or more kinds might be combined to be used. As the positive electrode active material, the lithium nickel cobalt manganese base composite oxide is especially preferable because it has superior characteristics, such as initial resistance characteristics.

The mean particle diameter (D50) of the positive electrode active material is not particularly restricted, but is, for example, equal to or more than 0.05 $\mu$m and not more than 25 $\mu$m, preferably equal to or more than 1 $\mu$m and not more than 20 $\mu$m, or further preferably equal to or more than 3 $\mu$m and not more than 15 $\mu$m.

The positive electrode active material layer 54 might contain a component other than the positive electrode active material, such as trilithium phosphate, electrical conducting material, and binder. As the electrical conducting material, it is possible to suitably use, for example, a carbon black, such as acetylene black (AB); a carbon fiber, such as vapor grown carbon fiber (VGCF) and carbon nanotube (CNT); or the other carbon material (for example, a graphite, or the like). As the binder, it is possible to use, for example, polyvinylidene fluoride (PVdF), or the like.

A content amount of the positive electrode active material in the positive electrode active material layer 54 (in other words, a content amount of the positive electrode active material with respect to a total mass of the positive electrode active material layer 54) is not particularly restricted, but preferably equal to or more than 70 mass%, further preferably equal to or more than 80 mass%, or furthermore preferably equal to or more than 85 mass% and not more than 99 mass%. The content amount of the trilithium phosphate in the positive electrode active material layer 54 is not particularly restricted, but is preferably equal to or more than 0.1 mass% and not more than 15 mass%, or further preferably equal to or more than 0.2 mass% and not more than 10 mass%. The content amount of the electrical conducting material in the positive electrode active material layer 54 is not particularly restricted, but preferably equal to or more than 0.1 mass% and not more than 20 mass%, or further preferably equal to or more than 0.3 mass% and not more than 15 mass%. A content amount of the binder in the positive electrode active material layer 54 is not particularly restricted, but preferably equal to or more than 0.4 mass% and not more than 15 mass%, or further preferably equal to or more than 0.5 mass% and not more than 10 mass%.

A thickness per one surface of the positive electrode active material layer 54 is not particularly restricted, but is normally equal to or more than 10 $\mu$m, or preferably equal to or more than 20 $\mu$m. On the other hand, this thickness is normally equal to or less than 400 $\mu$m, or preferably equal to or less than 300 $\mu$m.

As the negative electrode sheet 60, the above described negative electrode 60 is used.

As the separator 70, it is possible to use, for example, a porous sheet (film) configured with a resin, such as polyethylene (PE), polypropylene (PP), polyester, cellulose, and polyamide. The porous sheet described above might have a single layer structure, or might have two or more layers laminate structure (for example, a three layers structure in which PP layers are laminated on both surfaces of a PE layer). On a surface of the separator 70, a heat resistance layer (HRL) might be provided.

A thickness of the separator 70 is not particularly restricted, but is, for example, equal to or more than 5 $\mu$m and not more than 50 $\mu$m, or preferably equal to or more than 10 $\mu$m and not more than 30 $\mu$m. An air permeability of the separator 70 obtained by Gurley test is not particularly restricted, but is preferably equal to or less than 350 second/100cc.

The nonaqueous electrolytic solution contains, for example, a nonaqueous solvent and a supporting salt (an electrolyte salt). As the nonaqueous solvent, it is possible without particular restriction to use an organic solvent, such as carbonates, ethers, esters, nitriles, sulfones, and lactones, which can be used for the electrolytic solution of a general lithium ion secondary battery. Among them, the carbonates are preferable, and it is possible as a specific example of them to use ethylene carbonate (EC), propylene carbonate (PC), diethyl carbonate (DEC), dimethyl carbonate (DMC), ethyl methyl carbonate (EMC), monofluoroethylene carbonate (FEC), difluoroethylene carbonate (DFEC), monofluoromethyl difluoromethyl carbonate (F-DMC), trifluoro dimethyl carbonate (TFDMC), or the like. Regarding the nonaqueous solvents as described above, it is possible to use 1 kind alone or to combine 2 or more kinds so as to use the resultant. As one example, the nonaqueous solvent consists of only the carbonates. As another example, the nonaqueous solvent contains the carbonates and the esters, such as methyl acetate.

As the supporting salt, it is possible to suitably use, for example, a lithium salt, such as $LiPF_6$, $LiBF_4$, and lithium bis(fluorosulfonyl)imide (LiFSI) (preferably, the $LiPF_6$). A concentration of the supporting salt is preferably equal to or more than 0.7 mol/L and not more than 1.3 mol/L.

Incidentally, the above described nonaqueous electrolytic solution might contain a component other than the above described components, insofar as the effect of the present disclosure is not significantly spoiled, and thus might contains, for example, various additive agents which might be a coating layer forming agent, such as vinylene carbonate (VC) and oxalate complex; a gas generating agent, such as biphenyl (BP) and cyclohexylbenzene (CHB); a thickening agent; or the like.

The lithium ion secondary battery 100 can be used for various purposes. As a suitable usage, it is possible to apply it for a driving power supply mounted on a vehicle, such as battery electric vehicle (BEV), hybrid electric vehicle (HEV), and plug-in hybrid electric vehicle (PHEV). The lithium ion secondary battery 100 can be used as a storage battery, such as small electric power storage device. The lithium ion secondary battery 100 can be used, for example, in a form of a battery pack in which plural ones are connected in series and/or in parallel.

Above, as one example, the square-shaped lithium ion secondary battery 100 including the flat-shaped wound electrode assembly 20 has been explained. However, the lithium ion secondary battery can be configured to be a lithium ion secondary battery including a laminate type electrode assembly (in other words, an electrode assembly in which plural positive electrodes and plural negative electrodes are alternately laminated), too. The lithium ion secondary battery can be configured to be a cylindrical-shaped lithium ion secondary battery, a laminate case type lithium ion secondary battery, or the like.

According to a well known method, the lithium ion secondary battery 100 can be configured to be an all-solid state lithium ion secondary battery in which a solid electrolyte is used instead of the nonaqueous electrolyte.

The negative electrode 60 in accordance with the present embodiment is suitable for the negative electrode of the lithium ion secondary battery, but can be constructed for the negative electrode of the other secondary battery so as to be used, and the other secondary battery can be configured according to a well known method.

Below, practical examples relating to the present disclosure would be described in detail, which is not intended to restrict the present disclosure into the practical examples. Incidentally, the term "mean particle diameter" in the below described explanation means the above descried "mean particle diameter (D50)" if there is no particular explanation.

<Manufacture of negative electrode>

[Practical example 1]

As a negative electrode active material, first particles, second particles, and graphite particles were prepared. The first particles were a Si-C composite material whose expansion rate was 153% and whose mean particle diameter was 10 $\mu$m. The second particles were a Si-C composite material whose expansion rate was 261% and whose mean particle diameter was 4 $\mu$m. The graphite particles were 15 $\mu$m of graphite particles. The graphite particles described above were the graphite particles that substantially did not contain the Si. As a electrical conducting material, a single-walled carbon nanotube (SWCNT) was prepared. As a binder, a carboxymethyl cellulose (CMC), polyacrylic acid (PAA), and a styrene butadiene rubber (SBR) were prepared.

The expansion rate of the first particles was obtained by a procedure described below. The negative electrode having the same configuration as the present example, other than using only the first particles as the negative electrode active material, was manufactured with the procedure the same as the present example. A cross section along the thickness direction of this negative electrode was processed to be for the SEM observation, and then the SEM observation image of its processing surface was obtained. The observation magnification at that time was 2500 times. Next, a battery for measurement being the lithium ion secondary battery having the same configuration as the present example, other than using this negative electrode, was manufactured with the procedure the same as the present example. The battery for measurement was kept under 25°C environment, was subjected to the constant current electrical charge by the current value being 0.01 C till 4.2 V, and then was subjected to the constant voltage electrical charge till the current value reached 0.005 C, as the electrical charge. After that, the battery for measurement was disassembled, and the negative electrode was taken out. After that, the SEM observation was performed on the processing surface from which the SEM observation image was obtained before the electrical charge, and then the SEM observation image after the electrical charge was obtained. Then, the image analyzing software "ImageJ" was used, 100 first particles were selected at random from the SEM observation image before the electrical charge, and an area size A1 of the selected particle was measured. Next, regarding the SEM observation image after the electrical charge, an area size A2 of the same first particle was measured. Next, for each of the particles, the expansion rate was calculated with a following Formula (X):

$$\text{Expansion rate (\%)} = \left[\sqrt{\{(\text{Area size A2})/(\text{Area size A1})\}} \times 100\right]^3 \quad (X)$$

An arithmetic average value for the herein obtained expansion rates of 100 particles was calculated, and then treated as the expansion rate of the first particles. By the similar procedure, the expansion rate of the second particles was calculated.

Each of the mean particle diameter of the first particles and the mean particle diameter of the second particles was a particle diameter corresponding to an accumulation 50% from a fine particle side, regarding a particle size distribution on a volume basis measured by a particle size distribution measurement based on a laser-diffraction/light-scattering method.

The above described materials were kneaded with a water as a solvent to have a weight ratio satisfying graphite particles / first particles / second particles / SWCNT / CMC / PAA / SBR = 65 / 28 / 7 / 0.1 / 1 / 1 / 1.5, and thus a negative electrode mix paste was manufactured.

The negative electrode mix paste was manufactured by performing a first step and a second step which are described below. At the first step, firstly, the first particle, the second particle, a paste-formed SWCNT (a solid content rate was 2%), and the dispersion medium were put into a kneading device, and subjected to a dispersion mixing at 3000 rpm with a disper, so that the first paste was manufactured. At the second step, a stirring granulator was used and thus the graphite particles, the CMC, and the PAA were subjected to a dry mixing. The first paste, a powder mix obtained by the dry mixing, and the dispersion medium (the water) were subjected to a thick kneading. The solid content rate at the thick kneading time was 65%. Into the mixture on which the thick kneading was performed, the SBR and the dispersion medium (the water) were further added and then mixed. As described above, the negative electrode mix paste was manufactured.

The manufactured negative electrode paste was applied to coat a surface of the copper foil whose thickness was 10 $\mu$m, and was dried, so that the negative electrode active material layer was formed. After the negative electrode active material layer was subjected to a rolling press, the obtained sheet was processed to have a predetermined size, so that a negative electrode sheet of the present example was obtained.

[Practical example 2]

As the second particles, the Si-C composite material was used whose expansion rate was 342% and whose mean particle diameter was 3 $\mu$m. Regarding the other matters, the same material and the same procedure as the practical example 1 were used, so that the negative electrode sheet of the present example was obtained.

[Practical example 3]

As the first particles, the Si-C composite material was used whose expansion rate was 126% and whose mean particle diameter was 10 $\mu$m. As the second particles, the Si-C composite material was used whose expansion rate was 342% and whose mean particle diameter was 3 $\mu$m. Regarding the other matters, the same material and the same procedure as the practical example 1 were used, so that the negative electrode sheet of the present example was obtained.

[Practical example 4]

As the first particles, the Si-C composite material was used whose expansion rate was 173% and whose mean particle diameter was 9 $\mu$m. As the second particles, the Si-C composite material was used whose the expansion rate was 219% and whose mean particle diameter was 8 $\mu$m. Regarding the other matters, the same material and the same procedure as the practical example 1 were used, so that the negative electrode sheet of the present example was obtained.

[Practical example 5]

As the second particles, the Si-C composite material was used whose expansion rate was 261% and whose mean particle diameter was 10 $\mu$m. Regarding the other matters, the same material and the same procedure as the practical example 1 were used, so that the negative electrode sheet of the present example was obtained.

[Comparative example 1]

As the first particles, the Si-C composite material was used whose expansion rate was 153% and whose mean particle diameter was 6 $\mu$m. As the second particles, the Si-C composite material was used whose expansion rate was 261% and whose mean particle diameter was 10 $\mu$m. Regarding the other matters, the same material and the same procedure as the practical example 1 were used, so that the negative electrode sheet of the present example was obtained.

[Comparative example 2]

As the first particles, the Si-C composite material was used whose expansion rate was 261% and whose mean particle diameter was 10 $\mu$m. As the second particles, the Si-C composite material was used whose expansion rate was 261% and whose mean particle diameter was 4 $\mu$m. Regarding the other matters, the same material and the same procedure as the practical example 1 were used, so that the negative electrode sheet of the present example was obtained.

[Comparative example 3]

As the first particles, the Si-C composite material was used whose expansion rate was 153% and whose mean particle diameter was 3 $\mu$m. As the second particles, the Si-C composite material was used whose expansion rate was 261% and whose mean particle diameter was 10 $\mu$m. Regarding the other matters, the same material and the same procedure as the practical example 1 were used, so that the negative electrode sheet of the present example was obtained.

[Comparative example 4]

As the first particles, the Si-C composite material was used whose expansion rate was 121% and whose mean particle diameter was 10 $\mu$m. As the second particles, the Si-C composite material was used whose expansion rate was 415% and whose mean particle diameter was 3 $\mu$m. Regarding the other matters, the same material and the same procedure as the practical example 1 were used, so that the negative electrode sheet of the present example was obtained.

[Comparative example 5]

As the second particles, the Si-C composite material was used whose expansion rate was 261% and whose mean particle diameter was 1 $\mu$m. Regarding the other matters, the same material and the same procedure as the practical example 1 were used, so that the negative electrode sheet of the present example was obtained.

[Comparative example 6]

As the negative electrode active material, the first particles and the graphite particles were used, but the second particles were not used. Regarding the other matters, the same material and the same procedure as the practical example 1 were used, so that the negative electrode sheet of the present example was obtained.

<Manufacture of lithium ion secondary battery for evaluation>

$LiNi_{1/3}Co_{1/3}Mn_{1/3}O_2$ (NCM) as a positive electrode active material powder, acetylene black (AB) as an electrical conducting material, polyvinylidene fluoride (PVdF) as a binder were mixed at a mass ratio being NCM : AB : PVdF = 100 : 1 : 1 with N-methylpyrrolidone (NMP), so that a positive electrode mix paste was prepared. This paste was applied to coat a surface of the aluminum foil whose thickness was 15 μm and was dried, so that the positive electrode active material layer was formed. After the positive electrode active material layer was subjected to the rolling press, the obtained sheet was processed to have a predetermined size, so that a positive electrode sheet was obtained.

A separator made from a porous polyolefin was prepared. To each of the above manufactured negative electrode sheet and positive electrode sheet, a lead was attached, and then the resultant was laminated via the separator, so that the electrode assembly was manufactured. This was accommodated together with the nonaqueous electrolytic solution in a case configured with an aluminum laminate film. As a nonaqueous electrolytic solution, a solution was used in which the LiPF$_6$ was dissolved as the supporting salt at a concentration being 1.0 mol/L into a mixed solvent containing the ethylene carbonate (EC), the fluoro ethylene carbonate (FEC), the ethyl methyl carbonate (EMC), and the dimethyl carbonate (DMC) at a volume ratio being 15 : 5 : 40 : 40. After that, the case was sealed, so that the lithium ion secondary battery for evaluation was obtained.

<Cycle characteristic evaluation>

The above manufactured lithium ion secondary battery for evaluation was kept under 25°C environment. Each lithium ion secondary battery for evaluation was subjected to the constant current electrical charge by the current value being 0.4 C till 4.2 V, and then subjected to the constant voltage electrical charge till the current value reached 0.1 C. Next, each lithium ion secondary battery for evaluation was subjected to the constant current electrical discharge by the current value being 0.4 C till 2.5 V. Then, the discharge capacity at that time was measured, so that the initial capacity was obtained.

An electrical charge and discharge, in which the above described electrical charge and discharge was treated as 1 cycle, was repeated to satisfy 200 cycles. The electrical discharge capacity after the 200 cycles was obtained by a method similar to the initial capacity. As an indicator of the cycle characteristic, the capacity maintenance rate (%) was obtained by (Electrical discharge capacity after 200 cycles of electrical charge and discharge / Initial capacity) x 100. The initial capacity was the electrical discharge capacity of the above described electrical charge and discharge at the first cycle. Incidentally, it was better as the capacity maintenance rate was closer to 100%, and it was evaluated regarding the situation in which the capacity maintenance rate was equal to or more than 80% that the reduction in the capacity maintenance rate after the electrical charge and discharge cycle was suppressed.

[Table 1]

Table 1

| | | First particles | | Second particles | | Expansion rate of first particles / Expansion rate of second particles | Mean particle diameter of second particles / Mean particle diameter of first particles | Capacity maintenance rate (%) |
|---|---|---|---|---|---|---|---|---|
| | | Expansion rate (%) | Mean particle diameter (μm) | Expansion rate (%) | Mean particle diameter (μm) | | | |
| Practical example 1 | | 153 | 10 | 261 | 4 | 0.6 | 0.4 | 88 |
| Practical example 2 | | 153 | 10 | 342 | 3 | 0.4 | 0.3 | 87 |
| Practical example 3 | | 126 | 10 | 342 | 3 | 0.4 | 0.3 | 84 |
| Practical example 4 | | 173 | 9 | 219 | 8 | 0.8 | 0.9 | 85 |

(continued)

| | First particles | | Second particles | | Expansion rate of first particles / Expansion rate of second particles | Mean particle diameter of second particles / Mean particle diameter of first particles | Capacity maintenance rate (%) |
|---|---|---|---|---|---|---|---|
| | Expansion rate (%) | Mean particle diameter (μm) | Expansion rate (%) | Mean particle diameter (μm) | | | |
| Practical example 5 | 153 | 10 | 261 | 10 | 0.6 | 1 | 80 |
| Comparative example 1 | 153 | 6 | 261 | 10 | 0.6 | 1.7 | 72 |
| Comparative example 2 | 261 | 10 | 261 | 4 | 1 | 0.4 | 75 |
| Comparative example 3 | 153 | 3 | 261 | 10 | 0.6 | 3.3 | 74 |
| Comparative example 4 | 121 | 10 | 415 | 3 | 0.3 | 0.3 | 71 |
| Comparative example 5 | 153 | 10 | 261 | 1 | 0.6 | 0.1 | 65 |
| Comparative example 6 | 153 | 10 | - | - | - | - | 71 |

Based on the result shown in Table 1, regarding Practical examples 1 to 4, the expansion rate of the first particles is more than 0.3 and not more than 0.9 when the expansion rate of the second particles is treated as 1. When the mean particle diameter of the first particles is treated as 1, the mean particle diameter of the second particles is more than 0.1 and not more than 1. In Practical examples 1 to 4 that include the negative electrodes having the configuration described above, it was shown that the reduction in the capacity maintenance rate after the electrical charge and discharge cycle was suppressed.

Above, specific examples of the present disclosure have been explained in detail, but these are merely illustrative, and are not construed as limiting the scope of the appended claims. The technique recited in claims contains matters in which the above-illustrated specific example is variously deformed or changed.

In short, the negative electrode of the secondary battery of the present disclosure, and the secondary battery are represented by Items [1] to [8].

[1] A negative electrode of a secondary battery, comprising:

a negative electrode current collector; and
a negative electrode active material layer that is supported by the negative electrode current collector, wherein the negative electrode active material layer comprises a first Si-containing particle and a second Si-containing particle,
an expansion rate S1 of the first Si-containing particle after an electrical charge A with respect to before the electrical charge A, in which a constant current electrical charge is performed under 25°C environment by a current value being 0.01 C till 4.2 V and then a constant voltage electrical charge is performed till the current value reaches 0.005 C, is more than 0.3 and not more than 0.9 when an expansion rate S2 of the second Si-containing particle after the electrical charge A with respect to before the electrical charge A is treated as 1, and
a mean particle diameter (D50) of the second Si-containing particle is more than 0.1 and not more than 1 when a mean particle diameter (D50) of the first Si-containing particle is treated as 1.

[2] The negative electrode recited in Item [1], wherein
the expansion rate S1 of the first Si-containing particle is equal to or more than 100% and not more than 230%.

[3] The negative electrode recited in Item [1] or [2], wherein
the expansion rate S2 of the second Si-containing particle is equal to or more than 180% and not more than 420%.
[4] The negative electrode recited in any one of Items [1] to [3], wherein
the mean particle diameter (D50) of the first Si-containing particle is equal to or more than 1 $\mu$m and not more than 25 $\mu$m.
[5] The negative electrode recited in any one of Items [1] to [4], wherein
the mean particle diameter (D50) of the second Si-containing particle is equal to or more than 1 $\mu$m and not more than 10 $\mu$m.
[6] The negative electrode recited in any one of Items [1] to [5], wherein
the first Si-containing particle and the second Si-containing particle comprise a carbon base material comprising a void and comprise a nanoparticle comprising Si arranged at an inside of the void.
[7] The negative electrode recited in Items [1] to [6], wherein
the negative electrode active material layer further comprises a graphite particle that substantially does not comprise Si.
[8] A secondary battery, comprising: a positive electrode;

a negative electrode; and
an electrolyte, wherein
the negative electrode is the negative electrode recited in any one of Items [1] to [7].


**Claims**

1. A negative electrode (60) of a secondary battery (100), comprising:

   a negative electrode current collector (62); and
   a negative electrode active material layer (64) that is supported by the negative electrode current collector (62), wherein
   the negative electrode active material layer (64) comprises first Si-containing particles (12) and second Si-containing particles (14),
   an expansion rate S1 of the first Si-containing particles (12) after an electrical charge A with respect to before the electrical charge A, in which a constant current electrical charge is performed under 25°C environment by a current value being 0.01 C till 4.2 V and then a constant voltage electrical charge is performed till the current value reaches 0.005 C, is more than 0.3 and not more than 0.9 when an expansion rate S2 of the second Si-containing particles (14) after the electrical charge A with respect to before the electrical charge A is treated as 1, and
   a mean particle diameter (D50) of the second Si-containing particles (14) is more than 0.1 and not more than 1 when a mean particle diameter (D50) of the first Si-containing particles (12) is treated as 1.

2. The negative electrode (60) according to claim 1, wherein
   the expansion rate S1 of the first Si-containing particles (12) is equal to or more than 100% and not more than 230%.

3. The negative electrode (60) according to claim 2, wherein
   the expansion rate S2 of the second Si-containing particles (14) is equal to or more than 180% and not more than 420%.

4. The negative electrode (60) according to any one of claims 1 to 3, wherein
   the mean particle diameter (D50) of the first Si-containing particles (12) is equal to or more than 1 $\mu$m and not more than 25 $\mu$m.

5. The negative electrode (60) according to claim 4, wherein
   the mean particle diameter (D50) of the second Si-containing particles (14) is equal to or more than 1 $\mu$m and not more than 10 $\mu$m.

6. The negative electrode (60) according to any one of claims 1 to 3, wherein
   the first Si-containing particles (12) and the second Si-containing particles (14) comprise carbon base materials comprising voids and comprise nanoparticles comprising Si arranged at an inside of the voids.

7. The negative electrode (60) according to any one of claims 1 to 3, wherein

the negative electrode active material layer (64) further comprises graphite particles (16) that substantially do not comprise Si.

8. A secondary battery (100), comprising:

a positive electrode (50);
a negative electrode (60); and
an electrolyte, wherein
the negative electrode (60) is the negative electrode (60) according to claim 1.

FIG.1

FIG.2

FIG.3

FIG.4

Europäisches
Patentamt

European
Patent Office

Office européen
des brevets

# EUROPEAN SEARCH REPORT

**Application Number**

EP 25 20 0176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2024 115207 A (PRIME PLANET ENERGY & SOLUTIONS INC) 26 August 2024 (2024-08-26) * paragraphs [0026], [0030] - [0037], [0056]; example 1 * ----- | 1-8 | INV. H01M4/133 H01M4/134 H01M4/36 H01M4/38 H01M4/587 H01M10/0525 |
| X | EP 4 333 105 A1 (LG ENERGY SOLUTION LTD [KR]) 6 March 2024 (2024-03-06) * paragraph [0014] * ----- | 1-8 | |

**TECHNICAL FIELDS SEARCHED (IPC)**

H01M

The present search report has been drawn up for all claims

| Place of search | Date of completion of the search | Examiner |
|---|---|---|
| Munich | 12 February 2026 | Lavorenti, Marek |

EPO FORM 1503 03.82 (P04C01)

## ANNEX TO THE EUROPEAN SEARCH REPORT
## ON EUROPEAN PATENT APPLICATION NO.

EP 25 20 0176

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| JP 2024115207 | A | 26-08-2024 | JP | 7731386 B2 | 29-08-2025 |
| | | | JP | 2024115207 A | 26-08-2024 |
| EP 4333105 | A1 | 06-03-2024 | CN | 117397055 A | 12-01-2024 |
| | | | EP | 4333105 A1 | 06-03-2024 |
| | | | JP | 2024517489 A | 22-04-2024 |
| | | | JP | 2026020291 A | 06-02-2026 |
| | | | KR | 20230049031 A | 12-04-2023 |
| | | | US | 2024290954 A1 | 29-08-2024 |
| | | | WO | 2023059016 A1 | 13-04-2023 |

EPO FORM P0459

For more details about this annex : see Official Journal of the European Patent Office, No. 12/82

**REFERENCES CITED IN THE DESCRIPTION**

**Patent documents cited in the description**

- JP 2009009727 A
- JP 2015038862 A
- JP 2014046144 A